# EUROPEAN PATENT APPLICATION

(11) **EP 1 727 172 A1**
(43) Date of publication of application: **29.11.2006**
(21) Application number: 05253287.6
(22) Date of filing: 27.05.2005
(51) Int. Cl.: H01H 13/70

(54) **Keyboard module with light-emitting array and key unit thereof**

(71) Applicant: Mitac Technology Corp., Hsin-Chu, Hsien (TW)
(72) Inventor: Chang, Chih-Ching, Taipey City, Taiwan 104 (TW)
(74) Representative: Dearing-Lambert, Peter Richard

(57) **Abstract**

A keyboard module (1) includes a plurality of key units (100), each of which is provided below a cap member (2) thereof with an array of light-emitting elements (31). Under the control of a keyboard control circuit (6) in the keyboard module (1), the light-emitting elements (31) below each cap member (2) are selectively driven to emit light, which is projected toward the cap member (2) to show a specific character on a top surface of the cap member (2). A key switch (5) is located below the cap member (2) and is actuated to generate and send a key signal to the keyboard control circuit (6) when the cap member (2) is depressed.

## Description

### FIELD OF THE INVENTION

The present invention relates to an input device with easily readable characters provided thereon, and more particularly to a keyboard module using light-emitting array to show character on key unit thereof.

### BACKGROUND OF THE INVENTION

A variety of apparatus, such as computers, measuring instruments, control devices, digital devices, office automation equipment, etc., are equipped with a keyboard for inputting data. By way of example, the keys on the keyboards of the currently available computers can be structurally divided into two types, namely, mechanical spring keys and silicon rubber membrane keys.

The keyboards for the current computers generally include a case, on which a plurality of key units are arranged. Each of these key units is provided at a top thereof with one or more figures, symbols, letters, and/or characters for a user to identify the meaning and function of that key unit during operation.

Each of the key units on the keyboard has unique functions represented by the figures, symbols, letters, and/or characters marked thereon, and such unique functions are not changeable by a user.

In the current computer window environment, it is possible for one computer operating system to support more than one language system. Therefore, the keyboard must also have input functions adapted to support different language systems, such as English, Chinese, Japanese, etc. Different encoding methods have been developed for inputting characters of different language systems via the same one keyboard, and there might be more than one method for inputting the same language system via one keyboard. For example, Chinese characters may be input via one keyboard using several different methods, including phonetic symbol, Chan-jeh, Da-yi, and other input methods.

To meet the requirement of supporting different language systems using more than one input methods via one single keyboard, each of the key units on the keyboard is usually marked at different corners of a top surface of a cap member thereof with different characters, so that a user may identify the meaning and functions of that key unit in different input modes and different input encoding methods. In this manner, a user needs to buy only one keyboard to support different input modes and different input encoding methods. However, the key units with so many different characters marked thereon tend to daze the user while operating the keyboard. The user has to verify the current operating mode before the exact functions of the key units can be confirmed.

In the conventional keyboards, the characters are provided on the key units by way of printing. Such printed characters on the key units are not easily readable when the keyboard is used in a dim environment.

Moreover, the printed characters are provided on the top surface of the cap members of the key units that are frequently touched by the user during operation, and are therefore easily worn off and could not be easily identified.

It is therefore necessary to develop an improved keyboard and key units to overcome the above-mentioned problems existed in the conventional keyboards.

### SUMMARY OF THE INVENTION

A primary object of the present invention is to provide a keyboard module using light-emitting array to show character on key unit thereof, so that each key unit on the keyboard has only one specific character shown thereon each time, allowing a user to easily identify the function of the key unit.

Another object of the present invention is to provide a keyboard using light-emitting array to show character on key unit thereof, in which a light-emitting element array is provided below each key unit on the keyboard, and the light-emitting elements in the array are selectively driven to emit and project light toward the key unit to show a specific character on the key unit.

A further object of the present invention is to provide a keyboard using light-emitting array to show character on key unit thereof, in which the function of each key unit is indicated by an illuminant character shown on the top of the key unit.

A further object of the present invention is to provide a key unit with a light-emitting array to show visible character thereon.

With the present invention, each key unit on the keyboard shows a specific character depending on an operating mode currently in use, so that a user may easily and clearly identify the current function of the key unit. And, the light-emitting element array provided in each key unit can be easily and selectively driven to show an illuminant character on the key unit. In this manner, it is not necessary to show a plurality of characters and symbols within the small cap member of each key unit at the same time, allowing the user to more easily input correct data using a desired language system.

To achieve the above objectives, in accordance with the present invention, a keyboard module includes a plurality of key units, each of which is provided below a cap member thereof with an array of light-emitting elements. Under the control of a keyboard control circuit in the keyboard module, the light-emitting elements below each cap member are selectively driven to emit light, which is projected toward the cap member to show a specific character on a top surface of the cap member. A key switch is located below the cap member and is actuated to generate and send a key signal to the keyboard control circuit when the cap member is depressed.

With the technical means adopted in the present invention, a conveniently operable keyboard with easily readable key unit is provided to solve the problems existed in the conventional keyboards, including dazing and easily worn off characters printed on small key units, and key functions that must be identified according to the operating mode currently in use.

The light-emitting element array below each key unit provides an illuminant character on the key unit each time, allowing a user to correctly identify the function of the key unit even in a dim environment. In other words, the use of the keyboard of the present invention is not limited to an environment having sufficient external light source.

With the present invention, the keyboard produced in the same specification and design may be sold to all countries in the world for use, so long as the keyboard supports different language system platforms for showing characters of different language systems on the key units thereof. As a result, the keyboard of the present invention saves a keyboard manufacturer the troubles of carrying and managing a large stock of different keyboards and handling complicate shipments.

### BRIEF DESCRIPTION OF THE DRAWINGS

The structure and the technical means adopted by the present invention to achieve the above and other objects can be best understood by referring to the following detailed description of the preferred embodiments and the accompanying drawings, wherein
Fig. 1 is a fragmentary perspective view of a keyboard using light-emitting array to show character on key unit thereof according to the present invention;
Fig. 2 is an exploded perspective view of a key unit of the keyboard according to a first embodiment of the present invention;
Fig. 3 is a sectional view taken along line 3-3 of Fig. 1;
Fig. 4 is an exploded perspective view of a key unit of the keyboard according to a second embodiment of the present invention;
Fig. 5 is a sectional view taken along line 5-5 of Fig. 4;
Fig. 6 is a block diagram showing the connection of key units of the keyboard of the present invention to a keyboard control circuit thereof;
Fig. 7 is a fragmentary plan view of the keyboard of the present invention with English alphabetic characters shown on key units thereof using light-emitting array; and
Fig. 8 is a fragmentary plan view of the keyboard of the present invention with Chinese phonetic symbols shown on key units thereof using light-emitting array.

### DETAILED DESCRIPTION OF THE PREFERRED EMBODIMENTS

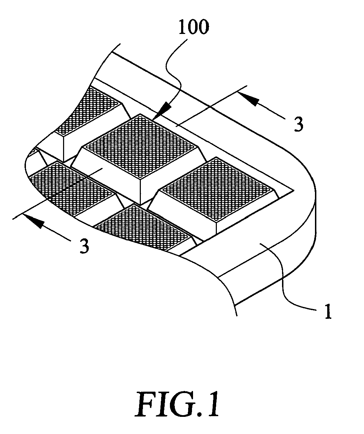

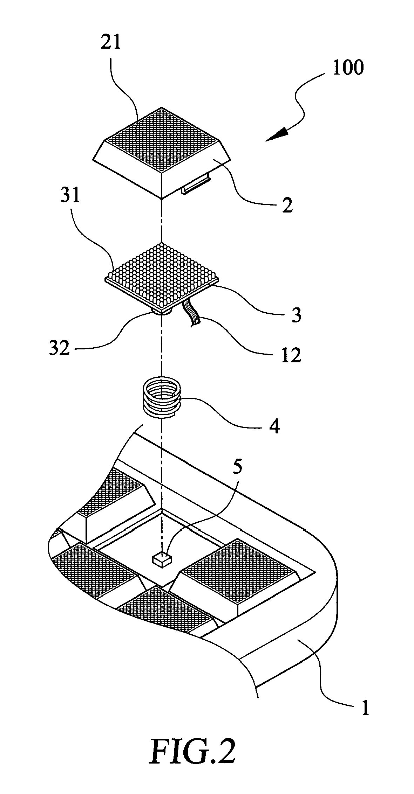

Please refer to Fig. 1 that is a fragmentary perspective view of a keyboard module using light-emitting array to show character on key unit thereof according to the present invention, and to Fig. 2 that is an exploded perspective view of a key unit of the keyboard module according to a first embodiment of the present invention. As shown, the keyboard module, which is generally denoted with a reference numeral 1, includes a plurality of key units 100 arranged on a case of the keyboard module 1. Each of the key units 100 is provided on a top surface with one character each time for a user to identify the meaning and function of that key unit 100.

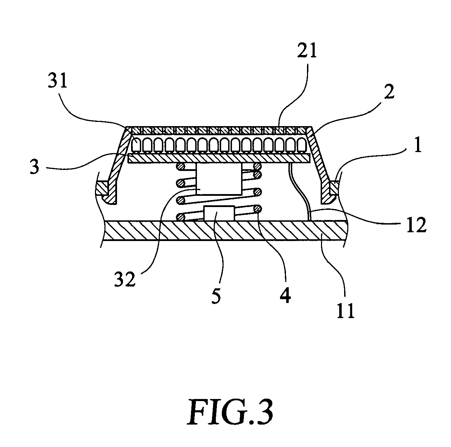

Fig. 3 is a sectional view taken along line 3-3 of Fig. 1. Please refer to Figs. 1, 2, and 3 at the same time. In the first embodiment of the present invention, each key unit 100 includes a cap member 2 located at the top thereof for a user to depress and thereby input data. The cap member 2 is formed of a plurality of light transmittable areas 21 set in array.

A light-emitting element substrate 3 is provided below the cap member 2 with a plurality of light-emitting elements 31 arrayed thereon. Each of the light-emitting elements 31 is aligned with one light-transmittable area 21 on the cap member 2. Under control of a keyboard control circuit in the keyboard module 1, the light-emitting elements 31 are selectively driven to emit light. The emitted light is projected toward the cap member 2 to show a specific character.

The light-emitting element substrate 3 has a downward extended post 32 provided at a bottom side thereof for a restoring spring 4 to mount therearound. A key switch 5 is provided on a circuit substrate 11 in the keyboard module 1 corresponding to the post 32. The circuit substrate 11 is electrically connected to the light-emitting element substrate 3 via a signal line 12, which may be, for example, a currently available soft circuit board.

The restoring spring 4 normally pushes the cap member 2 of the key unit 100 upward. When the cap member 2 is depressed, the downward extended post 32 below the light-emitting element substrate 3 is moved downward to touch the corresponding key switch 5, so that the key switch 5 generates a key signal, which is sent to the keyboard control circuit in the keyboard module 1.

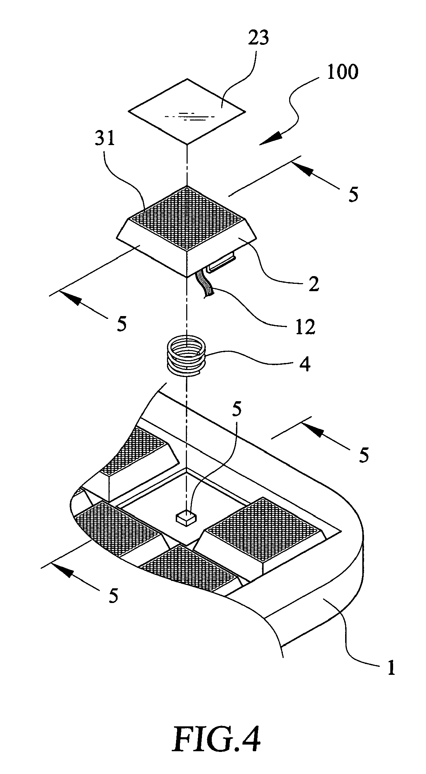

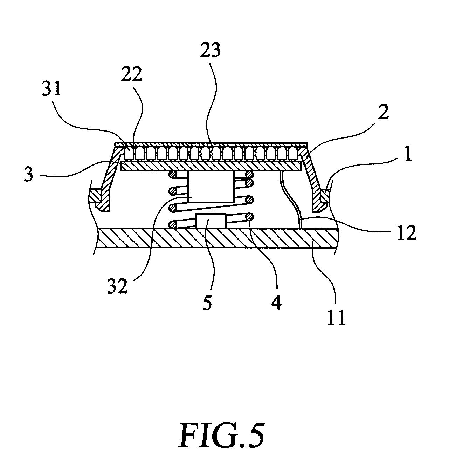

Please refer to Fig. 4 that is an exploded perspective view of a key unit of the keyboard according to a second embodiment of the present invention, and to Fig. 5 that is a sectional view taken along line 5-5 of Fig. 4. Since the second embodiment is generally structurally similar to the first embodiment, elements that are common in the two embodiments are denoted with the same reference numerals. In the second embodiment, each key unit 100 also has one character provided thereon each time for a user to identify the meaning and function of that key unit 100.

The cap member 2 of each key unit 100 in the second embodiment is formed of a plurality of arrayed receiving holes 22. A plurality of light-emitting elements 31 are arrayed on a light-emitting element substrate 3, such that each of the light-emitting elements 31 is aligned with and received in one receiving hole 22 on the cap member 2. A protective cover 23 is attached to the top surface of the cap member 2.

In the second embodiment, there is also a downward extended post 32 provided at a bottom side of the light-emitting element substrate 3 for a restoring spring 4 to mount therearound, and a key switch 5 is provided on the circuit substrate 11 in the keyboard 1 corresponding to the post 32. Again, the circuit substrate 11 is electrically connected to the light-emitting element substrate 3 via a signal line 12.

The restoring spring 4 normally pushes the cap member 2 of the key unit 100 upward. When the cap member 2 is depressed, the downward extended post 32 below the light-emitting element substrate 3 is moved downward to touch the corresponding key switch 5, so that the key switch 5 generates a key signal, which is sent to the keyboard control circuit in the keyboard 1.

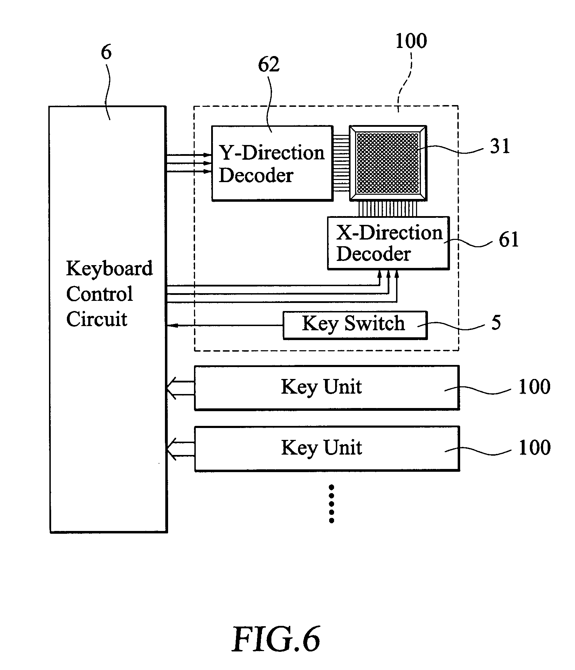

Fig. 6 is a block diagram showing the connection of the key units 100 to the keyboard control circuit 6 in the keyboard of the present invention. As shown, each of the key units 100 includes an X-direction decoder 61 and a Y-direction decoder 62. With the X-direction and Y-direction decoders 61, 62, only a few signal lines are needed to control the array of the light-emitting elements 31. When the cap member 2 of the key unit 100 is depressed, the key switch 5 is actuated to generate a key signal, which is sent to the keyboard control circuit 6.

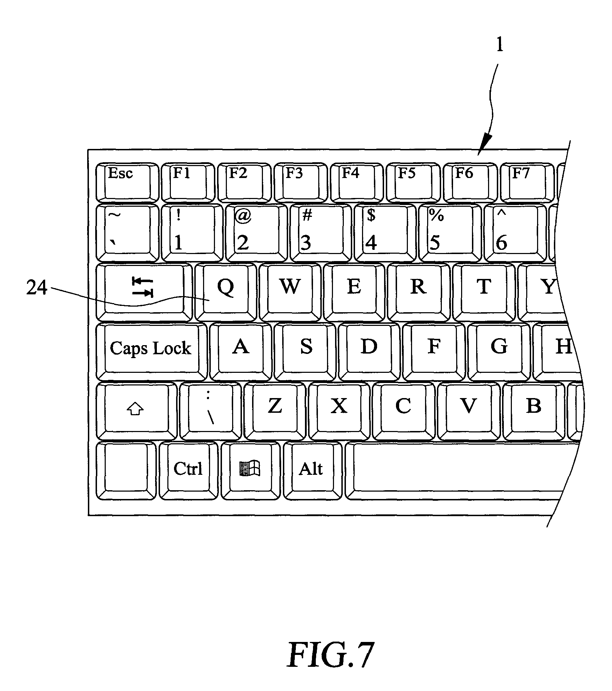

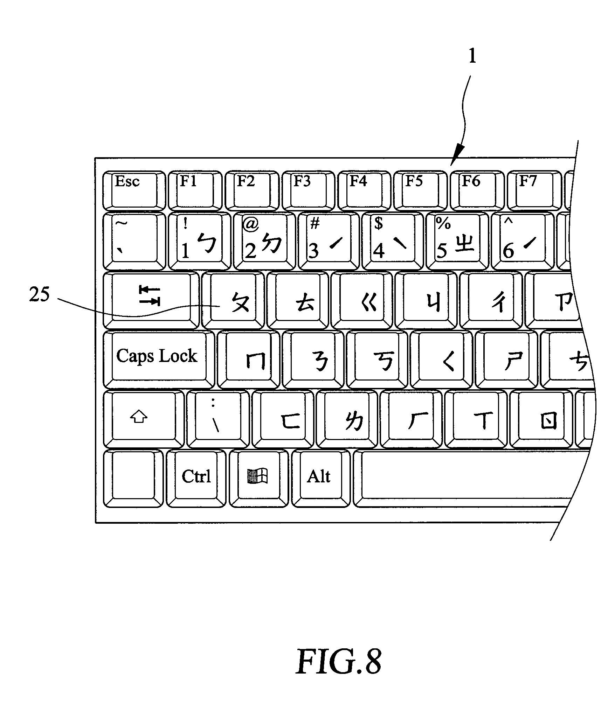

With the above-described structural arrangements, and the control via the keyboard control circuit 6 in the keyboard module 1, the key units 100 on the keyboard module 1 of the present invention may have a different character shown on the cap members 2 each time, including a numeral, a letter, a figure, or a symbol. For example, the key units 100 on the keyboard module 1 may have English alphabetic characters 24 shown thereon using light-emitting arrays, as shown in Fig. 7, or have Chinese phonetic symbols 25 shown thereon using light-emitting arrays, as shown in Fig. 8.

The keyboard module using light-emitting array to show character on key unit according to the present invention is a novel data input device very practical for use, and is applicable to computers, measuring instruments, control devices, digital devices, etc. that are equipped with a keyboard or keys.

Although the present invention has been described with reference to the preferred embodiments thereof, it is apparent to those skilled in the art that a variety of modifications and changes may be made without departing from the scope of the present invention which is intended to be defined by the appended claims.

## Claims

1. A keyboard module (1), **characterized in that** the keyboard module (1) comprising:
a keyboard case;
a keyboard control circuit (6) mounted in the keyboard case; and
a plurality of key units (100) arranged on a top of the keyboard case, each of the key units (100) including:
a cap member (2) located at a top of the key unit (100) for a user to depress;
a key switch (5) located below the cap member (2) to be actuated when the cap member (2) is depressed, the key switch (5) generating a key signal when being actuated, and the key signal generated by the key switch (5) being sent to the keyboard control circuit (6); and
a light-emitting element (31) array including a plurality of light-emitting elements (31) that are selectively driven to emit light under control of the keyboard control circuit (6), and the light emitted from the light-emitting elements (31) being projected toward the cap member (2) of the key unit (100) to show a specific character on the cap member (2).

2. The keyboard module (1) as claimed in claim 1, **characterized in that** each of the cap members (2) is provided with a plurality of light transmittable areas (21) set in array, and each of the light-emitting elements (31) in the light-emitting element array being aligned with one of the light transmittable areas (21).

3. The keyboard module (1) as claimed in claim 2, **characterized in that** the light-emitting elements (31) are arrayed on a light-emitting element substrate (3) provided below each of the cap members (2).

4. The keyboard module (1) as claimed in claim 1, **characterized in that** each of the cap members (2) is provided with a plurality of receiving holes (22) set in array, and each of the light-emitting elements (31) in the light-emitting element array being aligned with and received in one of the receiving holes (22).

5. The keyboard module (1) as claimed in claim 4, **characterized in that** the light-emitting elements (31) are arrayed on a light-emitting element substrate (3) provided below each of the cap members (2).

6. The keyboard module (1) as claimed in claim 4, **characterized in that** each of the cap members (2) has a protective cover (23) attached to a top surface thereof.

7. A key unit (100), **characterized in that** the key unit (100) comprising:
a cap member (2) located at a top of the key unit (100) for a user to depress;
a key switch (5) located below the cap member (2) to be actuated when the cap member (2) is depressed; and
a light-emitting element (31) array including a plurality of light-emitting elements (31) that are selectively driven to emit light projecting toward the cap member (2) of the key unit (100) to show a specific character on the cap member (2).

8. The keyboard module (1) as claimed in claim 7, **characterized in that** each of the cap members (2) is provided with a plurality of light transmittable areas (21) set in array, and each of the light-emitting elements (31) in the light-emitting element array being aligned with one of the light transmittable areas (21).

9. The keyboard module (1) as claimed in claim 8, **characterized in that** the light-emitting elements (31) are arrayed on a light-emitting element substrate (3) provided below each of the cap members (2).

10. The keyboard module (1) as claimed in claim 7, **characterized in that** each of the cap members (2) is provided with a plurality of receiving holes (22) set in array, and each of the light-emitting elements (31) in the light-emitting element (31) array being aligned with and received in one of the receiving holes (22).

11. The keyboard module (1) as claimed in claim 10, **characterized in that** the light-emitting elements (31) are arrayed on a light-emitting element substrate (3) provided below each of the cap members (2).

12. The keyboard module (1) as claimed in claim 10, **characterized in that** each of the cap members (2) has a protective cover (23) attached to a top surface thereof.
